Europäisches Patentamt

(19) European Patent Office

Office européen des brevets

(11) Publication number: **0 257 020**

**B1**

(12) **EUROPEAN PATENT SPECIFICATION**

(45) Date of publication of patent specification: **14.03.90**

(21) Application number: **86900038.0**

(22) Date of filing: **20.12.85**

(86) International application number:
**PCT/BR85/00012**

(87) International publication number:
**WO 87/03853 02.07.87 Gazette 87/14**

(51) Int. Cl.⁵: **B 62 K 21/26**

(54) **THERMIC HANDLE.**

(43) Date of publication of application:
**02.03.88 Bulletin 88/09**

(45) Publication of the grant of the patent:
**14.03.90 Bulletin 90/11**

(84) Designated Contracting States:
**DE FR GB IT**

(56) References cited:
**DE-A-2 630 236**
**DE-A-3 036 641**

(73) Proprietor: **GOBBI, Manlio M.**
**Pç. Joâo Bergmann, 199**
**90.000-Porto Alegre, RS (BR)**

(72) Inventor: **GOBBI, Manlio M.**
**Pç. Joâo Bergmann, 199**
**90.000-Porto Alegre, RS (BR)**

(74) Representative: **Gervasi, Gemma, Dr. et al**
**NOTARBARTOLO & GERVASI Srl 33, Viale**
**Bianca Maria**
**I-21100 Milano (IT)**

Courier Press, Leamington Spa, England.

## Description

The aim of this invention is to solve an until then challenging problem, which is the severe cold to which motorcyclists' hands are exposed while riding in cold seasons.

Wearing gloves provides some shelter from the flow of cold air on the back of the hands but it is far from solving the problem for it does not offer any source of heat.

That is left only to the rider's peripheral circulatory system. Such warming, evidently, has its efficiency drastically reduced as the outer temperature declines and wind speed increases. Heated handles have been already disclosed for instance by DE—A—3036641. (which forms the basis for the two-part form of the claim). Object of the present invention is an improved heating system made of handles resembling ordinary ones, except they are built in heat-proof elastomer and are internally run through by a shielded resistor. Such handles replace the original ones found on the handlebars of motorcycles. They house on their outer end a pilot lamp which remains on while the heating system is operating, and also distinguish those vehicles fitted with them. The handles are connected to the electric system of the cycle through a rheostat which permits heat intensity to be adjusted according to the rider's wish. By enclosing the handles, the rider's hands themselves absorb heat in their inside as well as prevent heat dissipation to the open air, thus supplying a permanent feeling of heat comfort.

Wearing gloves is always important to protect the back of the hands from the impact of cold wind, nevertheless the heated handles allow riding with bare hands or the use of gloves having a much thinner or even perforated palm which give the rider a better touch (tactile sense).

Figure 1 of the drawings shows handles attached to the handlebars of the motorcycle with the rheostat within easy reach. Attachment and effect of the pilot lamp can also be seen.

Figure 2 is an enlarged view, and figure 3 is an exploded view of the handle pointing out its flexible structure (1) its pilot lamp (2), its inner resistor (3) and the rheostat (4).

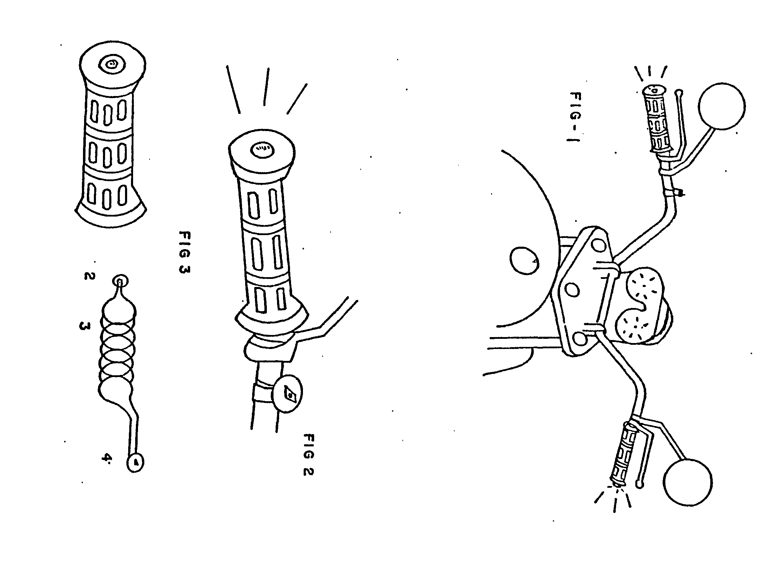

## Claim

Thermic handle for a motorcycle consisting of conventional looking handles made of elastomer resistant to high temperature and having receiver holes identical to those of conventional handles, and a shielded resistor which runs through the handle, characterised in that the heating is controlled by an on-off rheostat and the handle is provided at the external end with a pilot lamp.

## Patentanspruch

Thermohandgriff für ein Motorrad, der aus einem üblichen Handgriff aus einem gegenüber hohen Temperaturen widerstandsfähigen Elastomer besteht und Aufnahmelöcher aufweist, die mit denen bei üblichen Handgriffen identisch sind, und mit einem im Handgriff angeordnet abgeschirmten Widerstand, dadurch gekennzeichnet, daß die Aufheizung durch einen Ein-Aus-Rheostat regelbar und der Handgriff an dem äußeren Ende mit einer Kontrollampe versehen ist.

## Revendication

Poignée chauffante pour motocyle, consistant en une poignée d'aspect connu, faite en un élastomère résistant aux températures élevées et pourvu d'orifices récepteurs identiques à ceux des poignées connues et d'une résistance isolée qui tapisse l'intérieur de la poignée, caractérisée en ce que le chauffage est commandé par un rhéostat de marche-arrêt et que la poignée est pourvue d'une lampe pilote à son extrémité externe.

EP 0 257 020 B1

FIG-1

FIG 2

FIG 3

1